# EUROPÄISCHE PATENTANMELDUNG

(11) **EP 2 921 563 A1**
(43) Veröffentlichungstag der Anmeldung: **23.09.2015**
(21) Anmeldenummer: 14160812.5
(22) Anmeldetag: 20.03.2014
(51) Int. Cl.: C21C 5/46, F27B 3/06

(54) **Vorrichtung zum vertikalen Anheben und/oder Absenken eines metallurgischen Gefäßes, Anlage mit einer solchen Vorrichtung und Verfahren**

(71) Anmelder: Siemens VAI Metals Technologies GmbH, 4031 Linz (AT)
(72) Erfinder: Dorndorf, Markus, Dr., 76534 Baden-Baden (DE); Lauer, Alexander, 77948 Friesenheim (DE)
(74) Vertreter: Maier, Daniel Oliver

(57) **Zusammenfassung**

Die Erfindung betrifft eine Vorrichtung zum vertikalen Anheben und/oder Absenken eines metallurgischen Gefäßes zur Herstellung und/oder Behandlung von flüssigem Metall, wobei ein Gewicht des Gefäßes inklusive des flüssigen Metalls beim Anheben und/oder Absenken im Bereich von 10 bis 350 t, insbesondere im Bereich von 50 bis 180 t, liegt, wobei die Vorrichtung eine Tragkonstruktion mit mindestens zwei, unabhängig voneinander betätigbaren Positionierungselementen in Form von elektromechanischen Gewindespindelantrieben zum Anheben und/oder Absenken des Gefäßes aufweist.

## Beschreibung

Die Erfindung betrifft eine Vorrichtung zum vertikalen Anheben und/oder Absenken eines metallurgischen Gefäßes zur Herstellung und/oder Behandlung von flüssigem Metall, wobei ein Gewicht des Gefäßes inklusive des flüssigen Metalls beim Anheben und/oder Absenken im Bereich von 10 bis 350 t, insbesondere im Bereich von 50 bis 180 t, liegt. Weiterhin betrifft die Erfindung eine Anlage zur Herstellung und/oder Behandlung von flüssigem Metall, insbesondere eine Anlage umfassend einen Elektrolichtbogenofen oder eine Anlage zur Entgasung von flüssigem Metall, wie eine Ruhrstahl-Heraeus-Anlage (RH-Anlage), mit einer solchen Vorrichtung. Die Erfindung betrifft weiterhin ein Verfahren zur Behandlung von flüssigem Metall in einem metallurgischen Gefäß mittels einer Behandlungseinrichtung.

Zur Erhöhung der Qualität von Metallen werden diese bei Bedarf in geschmolzenem Zustand behandelt. Eine bekannte Behandlungsmethode ist beispielsweise die Entgasung von flüssigem Metall, um Reste von Sauerstoff und/oder weiteren Gasen aus der Metallschmelze zu entfernen. Dieses Verfahren wird in der Regel in einer RH-Anlage (Ruhrstahl-Heraeus-Anlage) durchgeführt. Dazu wird das flüssige Metall in einem metallurgischen Gefäß unterhalb einer Behandlungseinrichtung positioniert. Die Behandlungseinrichtung, beispielsweise ein Behandlungsgefäß mit einem evakuierbaren Innenraum, weist an ihrer Unterseite mindestens eine Einlassöffnung, weiterhin in der Regel auch eine Auslassöffnung auf. Zur Behandlung des in dem Gefäß befindlichen flüssigen Metalls wird dieses durch die Einlassöffnung in den Innenraum eingebracht, insbesondere eingesaugt. Dazu wird das Gefäß in der Regel durch eine Vorrichtung angehoben, so dass die Einlassöffnung und gegebenenfalls die Auslassöffnung in das flüssige Metall eintauchen und während der Behandlung keine Luft in den Innenraum eindringen kann. In der Behandlungseinrichtung wird das Metall behandelt, insbesondere entgast, und fließt im Anschluss an den Behandlungsvorgang wieder in das Gefäß zurück. Das Gefäß wird danach mit der Vorrichtung wieder nach unten abgesenkt bzw. abgesetzt.

Derzeit werden in Elektrostahlwerken, insbesondere im Flüssigstahlbereich, zur Manipulation von Behältern mit flüssigem Stahl oder Schlacke, Hydrauliksysteme bzw. Hydraulikzylinder sowie mechanische Hebel- oder Seilwindensysteme eingesetzt. Diese sind in der Regel hochpreisig, energie- und platzintensiv oder weisen Defizite im Gleichlauf oder der Positioniergenauigkeit sowie bei der Absturzsicherung und den Notlauffunktionen auf. Auch das Hydraulikmedium in Hydrauliksystemen bringt Umwelt- und Sicherheitsprobleme mit sich.

Die WO 2012000218 A offenbart ein Gefäßhebesystem aufweisend eine Tragkonstruktion, die mittels Hydraulikzylindern angehoben wird. Die Tragkonstruktion, wie auch das mit flüssigem Metall gefüllte Gefäß selbst, weist ein hohes Eigengewicht auf und erfordert entsprechend leistungsstark ausgelegte Hubzylinder.

Die WO 2006/146466 A1 beschreibt einen Elektroschmelzofen, bei dem ein Schmelzgefäß inklusive einem Rahmenteil mittels Hubzylindern abgesenkt oder angehoben wird. Im Falle eines Defekts oder Notfalls muss gegebenenfalls das mit Schrott oder Schmelze gefüllte und damit schwere Schmelzgefäß mit dem Rahmenteil vertikal bewegt werden.

Aufgabe der Erfindung ist es, eine kostengünstige und platzsparende Vorrichtung sowie ein dafür geeignetes Verfahren zum Anheben eines metallurgischen Gefäßes anzugeben. Weiter ist es Aufgabe der Erfindung, eine einfach zu wartende Anlage, umfassend eine solche Vorrichtung, anzugeben.

Die Aufgabe wird für die Vorrichtung zum vertikalen Anheben und/oder Absenken eines metallurgischen Gefäßes zur Herstellung und/oder Behandlung von flüssigem Metall, wobei ein Gewicht des Gefäßes inklusive des flüssigen Metalls beim Anheben und/oder Absenken im Bereich von 10 bis 350 t liegt, gelöst, indem die Vorrichtung eine Tragkonstruktion mit mindestens zwei, unabhängig voneinander betätigbaren Positionierungselementen in Form von elektromechanischen Gewindespindelantrieben zum Anheben und/oder Absenken des Gefäßes aufweist. Insbesondere liegt ein Gewicht des Gefäßes inklusive des flüssigen Metalls beim Anheben und/oder Absenken im Bereich von 50 bis 180 t.

Die erfindungsgemäße Vorrichtung hat den Vorteil, dass im Vergleich zu bekannten Vorrichtungen das anzuhebende Gewicht deutlich verringert ist und daher geringer dimensionierte Positionierungselemente mit verringertem Energiebedarf verwendbar sind. Während im Stand der Technik oft schwere und unflexible Rahmenkonstruktionen als Teil der Vorrichtung zum Einsatz kommen und bewegt werden müssen, werden hier leichte und unabhängig voneinander bewegliche Positionierungselemente in Form von elektromechanischen Gewindespindelantrieben, insbesondere elektromechanische Hubzylinder mit Rollengewindetrieb, eingesetzt. Der Vorteil dieser elektromechanischen Gewindespindelantriebe liegt darin, dass durch diese die Kosten für die Vorrichtung gering sind. Die Hubmechanik und alle zum Antrieb gehörenden Baugruppen sind einfach und können platzsparend angeordnet werden. Gleichzeitig ist eine präzisere Positions- und Geschwindigkeitsregelung möglich als mit herkömmlichen Vorrichtungen. Bei Ausfall der elektrischen Versorgung der elektromechanischen Gewindespindelantriebe ist eine mechanische Selbsthemmung gewährleistet und eine Notabsenkung möglich. Der Energiebedarf der Vorrichtung ist gering und der Wartungsaufwand ist auf ein Minimum reduziert, wodurch eine Verfügbarkeit der Vorrichtung maximiert ist und ein geringerer Personalbedarf als für derartige Vorrichtungen üblich resultiert.

Aufgrund der Tatsache, dass die Vorrichtung ohne ein Hydraulikleitungssystem auskommt, ist auch die Gefahr vermindert, dass Hydraulikmittel austritt und ein Sicherheitsrisiko im Bereich der Flüssigmetallverarbeitung darstellt.

Zwar wurden elektromotorisch betätigbare Gewindespindeln beispielsweise bereits dazu eingesetzt, metallurgische Gefäße zu kippen, siehe DE 3200052 A1. Jedoch wurden sie bisher nicht in Bereichen eingesetzt, in denen eine hohe Tragfähigkeit bei gleichzeitig hoher dynamischer Belastung gefordert ist, wie es beim vertikalen Anheben eines metallurgischen Gefäßes mit flüssigem Metall, das ein enormes Gewicht im Bereich von 10 bis 350 t aufweist, der Fall ist.

Insbesondere ist eine derartige Vorrichtung in einer Anlage gemäß der WO 2006/146466 A1 zum vertikalen Anheben und Absenken des Schmelzgefäßes und des Rahmenteils einsetzbar.

Besonders bevorzugt ist eine Vorrichtung zur Behandlung von flüssigem Metall in dem Gefäß mittels einer Behandlungseinrichtung, wobei die Vorrichtung umfasst:
- mindestens zwei vertikal ausgerichtete Metallstreben,
- mindestens eine horizontal ausgerichtete Querstrebe, wobei die Querstrebe zwei Metallstreben miteinander verbindet und an diesen befestigt ist,
- die mindestens zwei, unabhängig voneinander betätigbaren Positionierungselemente in Form von elektromechanischen Gewindespindelantrieben, wobei jedes Positionierungselement an einem Ende mit der mindestens einen Querstrebe verbunden ist und am anderen Ende ein Gefäßaufnahmeelement aufweist, mittels welchem das Gefäß aufnehmbar ist, und
- mindestens ein Positionierungsmittel zur Ausrichtung einer Position des jeweiligen Gefäßaufnahmeelementes.

Eine solche Behandlung ist insbesondere eine Vakuumentgasung, insbesondere in einer RH-Anlage.

Dabei hat es sich bewährt, wenn die Metallstreben an einem ihrer Enden zur Fixierung in einem Untergrund vorgesehen sind. Der Untergrund kann dabei durch ein Fundament, eine Tragkonstruktion, einen Hallenboden usw. gebildet sein.

Bevorzugt ist pro Positionierungselement eine Führungsschiene vorhanden, um eine Bewegung der Gewindespindeln der gewindespindelantriebe zu führen. Dadurch wird ein Schwingen oder Pendeln des Gefäßes in horizontaler Richtung zuverlässig verhindert und eine Beschädigung der Positionierungselemente zuverlässig vermieden.

Die jeweilige Führungsschiene weist insbesondere eine Längsachse auf, die parallel zu den Längsachsen der Metallstreben verläuft. Bevorzugt ist die jeweilige Führungsschiene einstückig mit einer Metallstrebe ausgebildet. Dazu kann eine Metallstrebe eine Eingriffsnut aufweisen, in der das Positionierungselement geführt wird. Alternativ kann die Führungsschiene beabstandet von einer Metallstrebe an mindestens einer der Metallstreben und/oder mindestens einer Querstrebe montiert sein. Eine Führungsschiene kann weiterhin - mit oder ohne Verbindung zu einer Metallstrebe an einer Querstrebe - am Untergrund befestigt sein.

In einer bevorzugten Ausführungsform der Vorrichtung umfasst diese vier Metallstreben. Diese sind, in der Draufsicht gesehen, insbesondere an den Eckpunkten eines Rechtecks angeordnet. Aber auch eine Vorrichtung mit drei Metallstreben hat sich bewährt, wobei die Metallstreben dann in der Draufsicht gesehen an den Eckpunkten eines gleichschenkeligen oder gleichseitigen Dreiecks angeordnet sind.

Pro Querstrebe können lediglich ein Positionierungselement oder auch mehrere Positionierungselemente vorgesehen sein. Insbesondere aber werden zwei Positionierungselemente als Paar pro Gefäßaufnahmeelement vorgesehen. Dies ermöglicht eine gegenseitige Absicherung der Positionierungselemente bei einem Ausfall oder Versagen eines der Positionierungselemente, wobei das daran befestigte Gefäßaufnahmeelement gegen eine unkontrollierte vertikale Bewegung gesichert ist. Weiterhin kann eine Wartung oder ein Austausch eines der beiden Positionierungselemente in einfacher und schneller Weise erfolgen, wobei der Betrieb der Vorrichtung kurzzeitig auch mit einem Positionierungselement pro Gefäßaufnahmeelement aufrecht erhalten werden kann.

Bevorzugt weist ein Positionierungselement oder ein Paar an Positionierungselementen mindestens ein Behandlungseinrichtungsaufnahmeelement auf, wobei die Behandlungseinrichtung mit Hilfe der Behandlungseinrichtungsaufnahmeelemente aufnehmbar ist. Das oder die Behandlungseinrichtungsaufnahmeelemente kommen dann zum Einsatz, wenn eine Wartung oder ein Austausch der Behandlungseinrichtung erforderlich ist. Die Behandlungseinrichtungsaufnahmeelemente sind mittels der Positionierungselemente in vertikaler Richtung beweglich ausgebildet.

Die Aufgabe der Erfindung wird weiterhin durch eine Anlage zur Herstellung und/oder Behandlung von flüssigem Metall in einem metallurgischen Gefäß gelöst, aufweisend eine Vorrichtung nach Anspruch 1 und einen Elektrolichtbogenofen, wobei ein Untergefäß des Elektrolichtbogenofens zur Aufnahme von Schrott und zur Herstellung des flüssigen Metalls aus dem Schrott das metallurgische Gefäß bildet.

Die Vorteile einer derartigen ersten Anlage ergeben sich aus den oben genannten Vorteilen der Vorrichtung.

Insbesondere weist eine weitere Anlage zur Behandlung von flüssigem Metall in einem metallurgischen Gefäß eine erfindungsgemäße Vorrichtung gemäß einem der Ansprüche 2 bis 11 und weiterhin eine Behandlungseinrichtung auf, wobei die Behandlungseinrichtung an den Metallstreben und/oder den Querstreben der Vorrichtung lösbar befestigt ist. Die erfindungsgemäße Anlage weist die oben genannten Vorteile der Vorrichtung auf und bietet optional eine schnelle und kostengünstige Möglichkeit zum Wechsel der Behandlungseinrichtung.

Vorzugsweise ist die Behandlungseinrichtung mit Befestigungsmitteln an den Metallstreben und/oder Querstreben sowie an weiteren Anlagenteilen befestigt, die insbesondere automatisch mittels einer Fernbedienung aktiviert und gelöst werden können. Das ermöglicht ein schnelles An- und Abkuppeln der Behandlungseinrichtung im Wartungsfall ohne erforderlichen Personaleinsatz.

Die Anlage weist bevorzugt weiterhin ein Transportsystem zum Transport des Gefäßes in einer Transporteinrichtung, insbesondere einem Rollwagen, zur Behandlungseinrichtung auf. Bei einer Transporteinrichtung in Form eines Rollwagens wird in der Regel ein Schienensystem benötigt, auf dem der Rollwagen sich bewegt. Alternativ kann als Transporteinrichtung aber auch ein autonomes Fahrzeug dienen, das das Gefäß unter die Behandlungseinrichtung transportiert.

In einer besonders bevorzugten Ausführungsform handelt es sich bei der Anlage um eine, bei welcher die Behandlungseinrichtung zur Entgasung des flüssigen Metalls eingerichtet ist. Vorteilhafter Weise ist die Anlage eine RH-Anlage. Die Behandlungseinrichtung weist dabei einen evakuierbaren Innenraum auf, der mit mindestens einem Anlagenteil umfassend mindestens eine Vakuumpumpe verbunden ist. Insbesondere ist die Verbindung durch eine oder mehrere Rohrleitungen realisiert, die den Innenraum mit der mindestens einen Vakuumpumpe verbinden.

Ein Verfahren zur Behandlung von flüssigem Metall in einem metallurgischen Gefäß mittels einer Behandlungseinrichtung hat sich als vorteilhaft erwiesen, wobei das Gefäß mittels der erfindungsgemäßen Vorrichtung soweit angehoben wird, dass das flüssige Metall in dem Gefäß mittels der Behandlungseinrichtung behandelbar ist. Insbesondere weist die Behandlungseinrichtung dabei eine Einlassöffnung und eine Auslassöffnung auf, wobei das Gefäß soweit angehoben wird, dass die Einlassöffnung und die Auslassöffnung in das flüssige Metall eingetaucht sind.

Für einen Wechsel der Behandlungseinrichtung hat es sich dabei insbesondere als günstig erwiesen, wenn die Behandlungseinrichtung mit Befestigungsmitteln an den Metallstreben und/oder Querstreben sowie an weiteren Anlagenteilen befestigt ist und diese, insbesondere automatisch, mittels einer Fernbedienung aktiviert und gelöst werden. Das ermöglicht ein besonders schnelles An- und Abkuppeln der Behandlungseinrichtung im Wartungsfall.

Die Figuren 1 bis 4 sollen beispielhaft erfindungsgemäße Vorrichtungen und Anlagen sowie Verfahren aufzeigen. So zeigt:
- FIG 1: schematisch eine Vorrichtung in dreidimensionaler Darstellung,
- FIG 2: die Anlage gemäß FIG 1 in der Vorderansicht,
- FIG 3: eine Anlage mit einer Vorrichtung gemäß FIG 1 in der Seitenansicht, und
- FIG 4: eine Anlage mit einer Vorrichtung gemäß FIG 1 in der Draufsicht.

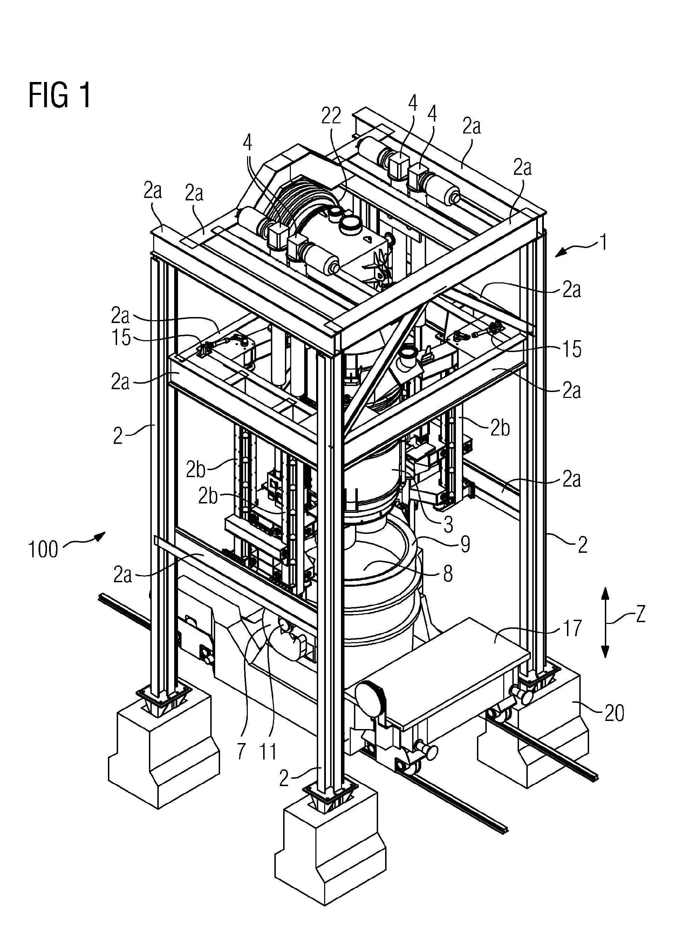

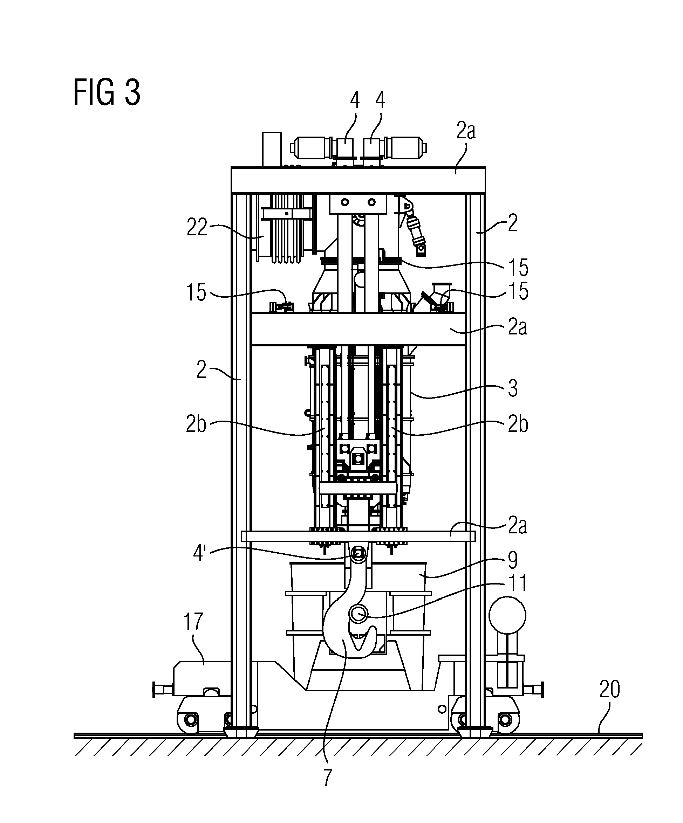

FIG 1 zeigt schematisch eine Vorrichtung 1 zum Anheben und wieder Absetzen eines metallurgischen Gefäßes 9 zur Behandlung von flüssigem Metall 8 in dem Gefäß 9 in dreidimensionaler Ansicht. Die Vorrichtung 1 umfasst vier Metallstreben 2, von denen hier nur drei sichtbar sind. Die Metallstreben 2 sind am Untergrund 20 befestigt und durch Querstreben 2a miteinander verbunden. Weiterhin sind Führungsschienen 2b vorhanden, die jeweils ein Paar von Positionierungselementen 4 in Form von elektromechanischen Gewindespindelantrieben führen und mit den Querstreben 2a verbunden sind. Die insgesamt vier hier vorhandenen Positionierungselemente 4 sind paarweise an ihrem oberen Ende an den Querstreben 2a befestigt und jedes Paar weist am anderen Ende ein Gefäßaufnahmeelement 7 auf, das mittels eines hier nicht dargestellten Positionierungsmittels 4' (vergleiche FIG 3) zur Ausrichtung einer Position des jeweiligen Gefäßaufnahmeelementes 7 eingerichtet ist. Das jeweilige Gefäßaufnahmeelement 7 ist mittels der Positionierungselemente 4 in z-Richtung oder entgegengesetzt dazu bewegbar.

Weiterhin zeigt FIG 1 auch eine Anlage 100, welche die Vorrichtung 1 umfasst, mit einer Behandlungseinrichtung 3, die mittels der Querstreben 2a gehalten ist.

Die Behandlungseinrichtung 3 ist mittels Befestigungsmitteln 15 befestigt. Im oberen Teil der Behandlungseinrichtung 3 sind weitere Anlagenteile 22 erkennbar, die eine Verbindung zwischen der Behandlungseinrichtung 3 und einer hier nicht dargestellten Vakuumpumpe zum Evakuieren des Innenraums der Behandlungseinrichtung 3 herstellen. Das Gefäß 9 weist zwei Griffelemente 11 auf, welche von den Gefäßaufnahmeelementen 7 aufgenommen sind, um das Gefäß 9 damit anzuheben. Das Gefäß 9 befindet sich auf einem Rollwagen 17 und wurde mit dessen Hilfe unter die Behandlungseinrichtung 3 transportiert.

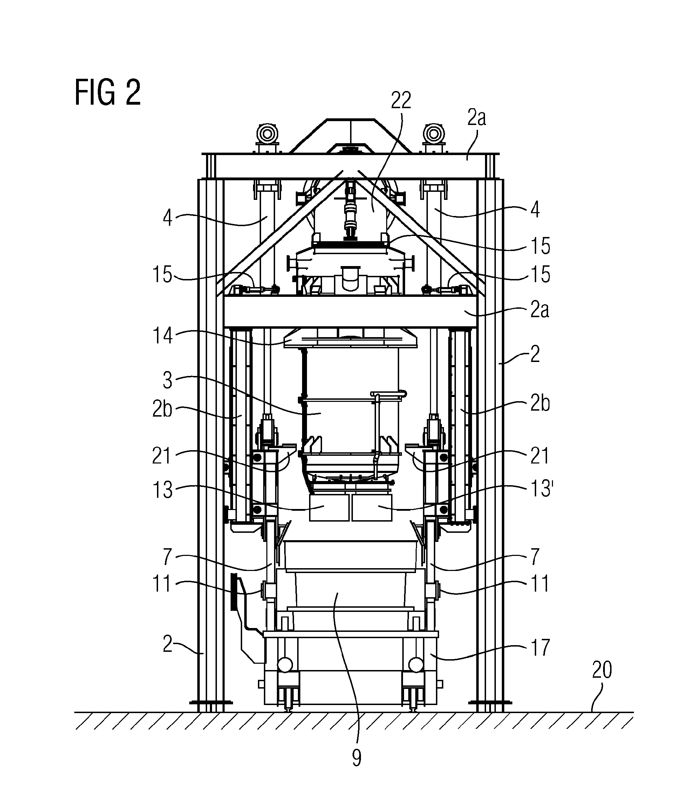

FIG 2 zeigt die Vorrichtung 1 in der Anlage 100 gemäß FIG 1 in der Vorderansicht. Gleiche Bezugszeichen wie in FIG 1 kennzeichnen gleiche Elemente. Die Behandlungseinrichtung 3 weist eine Einlassöffnung 13 und eine Auslassöffnung 13' auf, die in das flüssige Metall 8 eintauchen. Das flüssige Metall 8 wird nach Starten einer Evakuierung des Innenraums der Behandlungseinrichtung über die Einlassöffnung 13 in den Innenraum gesaugt, dort entgast und fließt über die Auslassöffnung 13' in das Gefäß 9 zurück.

Hier sind nun auch Behandlungseinrichtungsaufnahmeelemente 21 zur Aufnahme der Behandlungseinrichtung 3 im Wartungsfall erkennbar. Die Behandlungseinrichtungsaufnahmeelemente 21 sind hier an den Positionierungselementen 4 angeordnet und mit diesen vertikal verfahrbar. Die Behandlungseinrichtung 3 weist Vorsprünge 14 auf, an welchen die Behandlungseinrichtungsaufnahmeelemente 21 angreifen und eine Gewichtsentlastung im Bereich der Befestigungsmittel 15 bewirken, so dass diese in einfacher Weise gelöst werden können.

FIG 3 zeigt die Vorrichtung 1 innerhalb der Anlage 100 gemäß FIG 1 in der Seitenansicht. Gleiche Bezugszeichen wie in FIG 1 kennzeichnen gleiche Elemente. Beim Bewegen der Gewindespindeln der Positionierungselemente 4 wird das Gefäß 9 entweder angehoben und in Richtung Behandlungseinrichtung 3 bewegt, bis diese in das flüssige Metall 8 eintaucht oder aus diese Position auf den Rollwagen 17 abgesenkt. Die Positionierungselemente 4 werden dabei paarweise mittels der Führungsschienen 2b geführt.

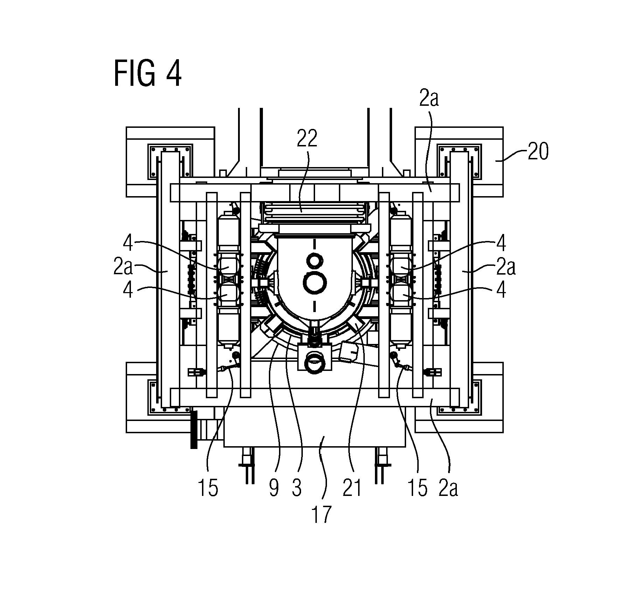

FIG 4 zeigt die Vorrichtung 1 innerhalb der Anlage 100 gemäß FIG 1 in der Draufsicht. Gleiche Bezugszeichen wie in FIG 1 kennzeichnen gleiche Elemente.

Die Figuren 1 bis 4 zeigen lediglich Beispiele, wie die Behandlungseinrichtung, die Behandlungseinrichtungsaufnahmeelemente, die Gefäßaufnahmeelemente, die Führungsschienen, die Positionierungselemente usw. ausgebildet sein können. Dem Fachmann erschließen sich in Kenntnis der vorliegenden Erfindung jedoch ohne Weiteres eine Vielzahl weiterer Möglichkeiten, wie eine erfindungsgemäße Vorrichtung oder eine erfindungsgemäße Anlage ausgebildet werden kann, ohne dabei erfinderisch tätig werden zu müssen.

So können beispielsweise die Hydraulikzylinder gemäß der WO 2006/146466 A1, siehe deren Figur 1, durch elektromechanische Gewindespindelantriebe zum Anheben und/oder Absenken des Gefäßmoduls, umfassend ein Schmelzgefäß und ein Rahmenteil, vorteilhaft ersetzt werden.

## Patentansprüche

1. Vorrichtung (1) zum vertikalen Anheben und/oder Absenken eines metallurgischen Gefäßes (9) zur Herstellung und/oder Behandlung von flüssigem Metall (8), wobei ein Gewicht des Gefäßes (9) inklusive des flüssigen Metalls (8) beim Anheben und/oder Absenken im Bereich von 10 bis 350 t, insbesondere im Bereich von 50 bis 180 t, liegt, wobei die Vorrichtung eine Tragkonstruktion mit mindestens zwei, unabhängig voneinander betätigbaren Positionierungselementen (4) in Form von elektromechanischen Gewindespindelantrieben zum Anheben und/oder Absenken des Gefäßes (9) aufweist.

2. Vorrichtung (1) nach Anspruch 1 zur Behandlung von flüssigem Metall (8) in dem Gefäß(9) mittels einer Behandlungseinrichtung (3), wobei die Vorrichtung (1) umfasst:
- mindestens zwei vertikal ausgerichtete Metallstreben (2),
- mindestens eine horizontal ausgerichtete Querstrebe (2a), wobei die Querstrebe (2a) zwei Metallstreben (2) miteinander verbindet und an diesen befestigt ist,
- die mindestens zwei, unabhängig voneinander betätigbare Positionierungselemente (4) in Form von elektromechanischen Gewindespindelantrieben, wobei jedes Positionierungselement (4) an einem Ende mit der mindestens einen Querstrebe (2a) verbunden ist und am anderen Ende ein Gefäßaufnahmeelement (7) aufweist, mittels welchem das Gefäß (9) aufnehmbar ist, und
- mindestens ein Positionierungsmittel (4')zur Ausrichtung einer Position des jeweiligen Gefäßaufnahmeelementes (7).

3. Vorrichtung nach Anspruch 2,
wobei die Metallstreben (2) an einem ihrer Enden zur Fixierung in einem Untergrund (20) vorgesehen sind.

4. Vorrichtung nach Anspruch 2 oder Anspruch 3,
wobei weiterhin pro Positionierungselement (4) eine Führungsschiene (2b) vorhanden ist, um eine Bewegung der Gewindespindeln der Gewindespindelantriebe zu führen.

5. Vorrichtung nach Anspruch 4,
wobei die Führungsschiene (2b) eine Längsachse aufweist, die parallel zu den Längsachsen der Metallstreben (2) verläuft.

6. Vorrichtung nach Anspruch 5,
wobei die Führungsschiene (2b) einstückig mit einer Metallstrebe (2) ausgebildet ist.

7. Vorrichtung nach Anspruch 5,
wobei die Führungsschiene (2b) beabstandet von einer Metallstrebe (2) an mindestens einer der Metallstreben (2) und/oder mindestens einer Querstrebe (2a) montiert ist.

8. Vorrichtung nach einem der Ansprüche 2 bis 7,
wobei vier Metallstreben (2) vorhanden sind.

9. Vorrichtung nach Anspruch 8,
wobei mindestens ein Rahmen vorhanden ist, der jeweils durch vier Querstreben (2a) gebildet ist, wobei eine Querstrebe (2a) zwei Metallstreben (2) miteinander verbindet.

10. Vorrichtung nach einem der Ansprüche 2 bis 9,
wobei ein Positionierungselement (4) oder ein Paar an Positionierungselement (4) mindestens ein Behandlungseinrichtungsaufnahmeelement (21) aufweist, wobei die Behandlungseinrichtung (3) mit Hilfe der Behandlungseinrichtungsaufnahmeelemente (21) aufnehmbar ist.

11. Vorrichtung nach Anspruch 10,
wobei die Behandlungseinrichtungsaufnahmeelemente (21) mittels der Positionierungselemente (4) in vertikaler Richtung beweglich ausgebildet sind.

12. Anlage zur Herstellung und/oder Behandlung von flüssigem Metall (8) in einem metallurgischen Gefäß (9), aufweisend eine Vorrichtung nach Anspruch 1 und einen Elektrolichtbogenofen, wobei ein Untergefäß des Elektrolichtbogenofens zur Aufnahme von Schrott und Herstellung des flüssigen Metalls (8) aus dem Schrott das metallurgische Gefäß (9) bildet.

13. Anlage zur Behandlung von flüssigem Metall (8)in einem metallurgischen Gefäß(9), aufweisend eine Vorrichtung (1) nach einem der Ansprüche 2 bis 11 und eine Behandlungseinrichtung (3), wobei die Behandlungseinrichtung (3) an den Metallstreben (2) und/oder den Querstreben (2a) der Vorrichtung (1) lösbar befestigt ist.

14. Anlage nach Anspruch 13,
aufweisend weiterhin ein Transportsystem zum Transport des metallurgischen Gefäßes(9) in einer Transporteinrichtung, insbesondere einem Rollwagen (17), zur Behandlungseinrichtung (3).

15. Anlage gemäß einem der Ansprüche 13 oder 14,
wobei die Behandlungseinrichtung (3) zur Entgasung des flüssigen Metalls (8) eingerichtet ist.

16. Anlage nach Anspruch 15,
wobei die Behandlungseinrichtung (3) zur Entgasung des flüssigen Metalls (8) mit mindestens einem Anlagenteil umfassend mindestens eine Vakuumpumpe verbunden ist.

17. Verfahren zur Behandlung von flüssigem Metall (8) in einem metallurgischen Gefäß(9) mittels einer Behandlungseinrichtung (3), wobei das Gefäß (9) mittels der Vorrichtung (1) gemäß einem der Ansprüche 2 bis 11 soweit angehoben wird, dass das flüssige Metall (8) in dem Gefäß (9) mittels der Behandlungseinrichtung (3) behandelbar ist.

18. Verfahren nach Anspruch 17,
wobei die Behandlungseinrichtung (3) eine Einlassöffnung (13) und eine Auslassöffnung (13') aufweist und wobei das Gefäß (9) soweit angehoben wird, dass die Einlassöffnung (13) und die Auslassöffnung (13') in das flüssige Metall (8) eingetaucht sind.
